# EUROPEAN PATENT APPLICATION

(11) **EP 3 575 577 A1**
(43) Date of publication of application: **04.12.2019**
(21) Application number: 19171897.2
(22) Date of filing: 30.04.2019
(51) Int. Cl.: F02C 7/06, F01D 25/18, F02C 7/36, B64C 1/14

(54) **OIL RECOVERY SYSTEM**

(30) Priority: 31.05.2018 GB 201808855
(71) Applicant: Rolls-Royce plc, London SW1E 6AT (GB)
(72) Inventor: Edwards, David, Derby, Derbyshire DE24 8BJ (GB); Williams, David, Derby, Derbyshire DE24 8BJ (GB)
(74) Representative: Rolls-Royce plc

(57) **Abstract**

An oil recovery system (80) arranged to recover lubricating oil (78) in a gas turbine engine (10), the oil recovery system (80) comprising: a separator (88) arranged to extract lubricating oil (90) from a mixture of lubricating oil and air (82); an oil tank (56) arranged to collect lubricating oil (90) extracted from the mixture (82); and an exit mast (114) arranged to vent air (112) extracted from the mixture (82) overboard from a core (11) of the engine (10), wherein the exit mast (114) comprises one or more openings (118) for venting air (112) from the separator (112); and wherein the one or more openings (118) faces at least partially upstream relative to a direction of airflow (42) through the gas turbine engine (10), such that the air (112) is vented in the upstream direction, and a dynamic head of any airflow pressurises the oil tank (56), via the exit mast (114).

## Description

The present disclosure relates to an oil recovery system, a gas turbine engine and a method of pressurising an oil tank.

A gas turbine engine includes one or more core shafts extending along a primary axis of the engine. The core shaft(s) are mounted to the stationary structure of the engine by bearings, which require lubrication. To lubricate the bearings, they are provided in an enclosed bearing chamber containing lubricant, such as oil.

The propulsive fan of the engine may be driven directly by one of the core shafts, or indirectly, through a gearbox coupled to one of the core shafts. The gearbox also requires lubrication, and so is also provided in an enclosed chamber containing lubricant.

Oil escaping from the bearing chamber or gearbox into the core of the engine can cause a fire risk. Therefore, to prevent the escape of oil, the bearing chamber or gearbox is sealed against the shaft. In addition, air is drawn from the core engine airflow, into the bearing chamber or gearbox, through the seals to create a pressure differential. This air must be vented out of the engine. However, the air is mixed with the oil. Therefore, the oil must be recovered, before it is vented, to ensure only clean air is exhausted.

Typically, gas turbine engines use a breather to extract oil from the air. At least some of the oil/air mix is drawn through a vent, into the breather, where the oil is removed. The air is then vented overboard to atmosphere. In addition to the breather, some of the oil/air mixture from the bearing chamber or gearbox is typically drawn by a pump into a separator. The air from the separator is also passed to the breather before venting. Oil collected by the breather and separator is fed back to an oil tank.

Oil from the tank is circulated back to the bearing chamber or gearbox by a pump. The inlet pressure of the pump is set by the pressure of the oil tank, which in turn is set by the pressure of the breather, which in turn is set by the atmospheric pressure to which the air is vented. The pressure in the vent is also set by the atmospheric pressure to which the air is vented.

To avoid cavitation of the pump, which would cause disruption in the delivery of oil, the inlet pressure of the pump should be above a minimum value. However, at low engine power, the air drawn from the engine core is low pressure. Therefore, to ensure the correct pressure differential is maintained, and air is still drawn through the vent, the pressure in the vent should be low.

If the vent and oil tank vent to the same low pressure, air is drawn through vent at low power, but the pump risks cavitation at high power/altitude, because atmospheric pressure is lower. If the vent and oil tank vent to the same high pressure, cavitation is avoided, but air is not drawn through the vent at low power, because the pressure differential between the atmospheric air and the core air is too low.

Typically, to avoid this, a pressure control valve or constriction is provided on the feed between the oil tank and the breather. This increases the pressure in the tank, but ensures that the vent is at low pressure, even at low power operating conditions.

According to a first aspect there is provided an oil recovery system arranged to recover lubricating oil in a gas turbine engine, the oil recovery system comprising: a separator arranged to extract lubricating oil from a mixture of lubricating oil and air; an oil tank arranged to collect the lubricating oil extracted from the mixture; and an exit mast arranged to vent air extracted from the mixture overboard from a core of the engine, wherein the exit mast comprises one or more openings for venting air from the separator; and wherein the one or more openings faces at least partially upstream relative to a direction of airflow through the gas turbine engine, such that the air is vented in the upstream direction, and a dynamic head of any airflow pressurises the oil tank, via the exit mast.

The system provides a simple and efficient way to pressurise the oil tank, and thus the inlet of the pump, without using a constrictor or valve with moving components. The system is thus simple to implement and provides a reliable way of providing a minimum pressure at the pump inlet.

The exit mast is only fed by the separator. No separate vent is provided to feed into the exit mast, and thus the higher pressure of the dynamic head does not prevent the oil/air mixture being drawn through the system, or a pressure differential being established across the seals.

The exit mast may be arranged to vent air into a bypass duct of the gas turbine engine. This provides further dynamic head at the exit mast, and ensures that dirty air is not vented near an exterior of the engine.

The oil recovery system may include: a pump for circulating lubricating oil from the oil tank to a lubricating chamber for lubricating a part of the gas turbine engine. An inlet pressure of the pump may be at least in part dependent on a pressure of the oil tank.

The oil recovery system may include: a pump for circulating the mixture of lubricating oil and air from a lubricating chamber for lubricating a part of the gas turbine engine to the separator.

The separator may output the lubricating oil to the tank, and a second mixture of lubricating oil and air, with reduced concentration of oil. The oil recovery system may further include: an oil breather, arranged to extract further lubricating oil from the second mixture of lubricating oil and air, and to provide the further lubricating oil to the oil tank, and the air with any remaining oil content to the exit mast.

Alternatively, the exit mast may be in direct fluid communication with the separator or oil tank. Thus, a breather is no longer required, further simplifying the system.

The oil recovery system may include: one or more conduits arranged between the lubricating chamber and the exit mast. The conduits may not include any pressure control valve or pressure control constriction. This simplifies the system, as discussed above.

Each of the one or more openings may have an opening axis extending perpendicular to a plane defined be the opening. Each of the one or more openings may have an opening angle defined between the opening axis and the direction of airflow. Each opening angle may vary between 0 degrees (where the opening faces directly upstream) and 90 degree (where the opening faces perpendicular to the airflow), such that the pressure of the oil tank is at least partially dependent on the opening angle. This allows the pressure in the oil tank to be set to a desired level.

According to a second aspect, there is provided, a gas turbine engine for an aircraft comprising: an engine core comprising a turbine, a compressor, and a core shaft connecting the turbine to the compressor; a fan located upstream of the engine core, the fan comprising a plurality of fan blades; one or more lubricating chambers arranged around the core shaft, each lubricating chamber comprising seals between a housing of the lubricating chamber and the core shaft; an air supply system arranged to direct pressurised air at the seals, in order to prevent escape of lubricating oil from the chamber, wherein the air mixes with the lubricating oil in the lubricating chamber; and an oil recovery system according to the first aspect, arranged to recover lubricating oil from the oil and air mixed in the lubricating chamber.

The oil recovery system provides a simple and efficient way to pressurise the oil tank, and thus the inlet of the pump, without using a constrictor or valve with moving components. The system is thus simple to implement and provides a reliable way of providing the correct pressure at the pump inlet.

The seals may comprise a seal selected from contacting carbon seals, air riding carbon seals, and brush seals. The high quality of the seals ensures that a low pressure air source may be used to create a pressure differential over the seals.

The turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft. The air supply system may be arranged to draw air from upstream of the first compressor. By drawing low pressure air from the engine, the engine efficiency is increased, as less work is done on the air.

The oil recovery system may be arranged to circulate lubricating oil from the oil tank to the lubricating chamber.

The gas turbine engine may include a bypass duct arranged around the engine core. The bypass duct may include radially extending support structures and/or guide vanes. The exit mast is arranged in one of the support structures and/or guide vanes, and the support structures and/or guide vane includes an opening facing downstream into a bypass airflow, to vent air from the exit mast.

At least one of the lubricating chambers may comprise a bearing chamber. The gas turbine engine may further include: a gearbox that receives an input from the core shaft and outputs drive to the fan so as to drive the fan at a lower rotational speed than the core shaft. At least one of the lubricating chambers may comprise the gearbox.

The oil and air mixture from the lubricating chamber may be exhausted only to the separator or oil tank. Thus, the system does not include a separate vent.

According to a third aspect, there is provided a method of pressuring an oil tank for collecting lubricating oil from a mixture of oil and air, in a gas turbine engine, the method comprising: separating a mixture of oil and air; collecting the lubricating oil in an oil tank; and venting the air through an exit mast having an opening facing at least partially upstream into an air flow through the gas turbine engine, such that a dynamic head of any airflow through the engine pressurises the oil tank, via the exit mast.

The method provides a simple and efficient way to pressurise the oil tank, and thus the inlet of the pump, without using a constrictor or valve with moving components. The method is thus simple to implement and provides a reliable way of providing the correct pressure at the pump inlet.

The tank may be pressurised without a pressure control valve or pressure control constriction.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** schematically illustrates an oil recovery system for extracting oil from an mixture of oil and air, and venting the air overboard; and
**Figure 5** schematically illustrates an alternative oil recovery system for extracting oil from an mixture of oil and air, and venting the air overboard.

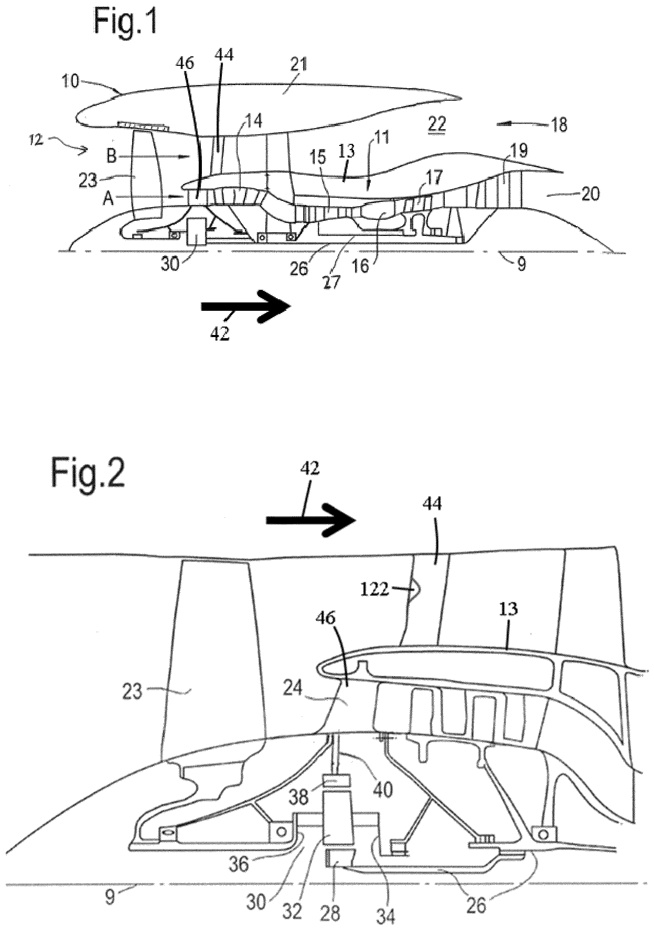

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

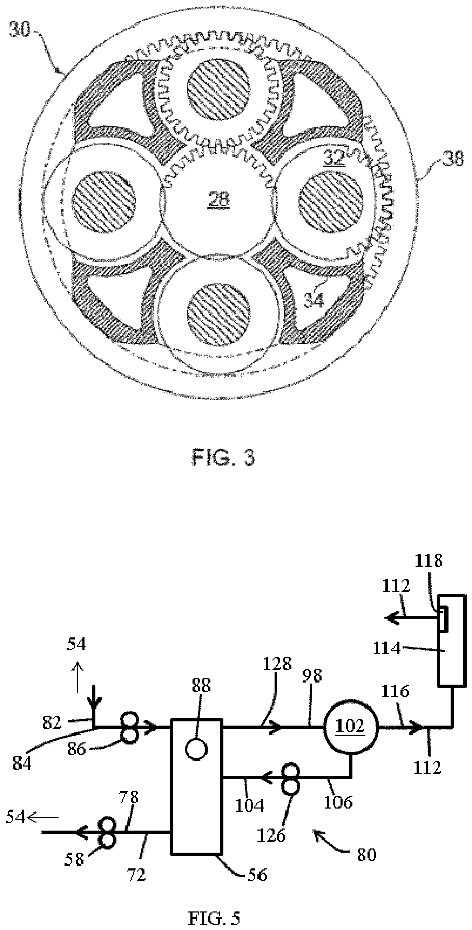

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The general direction of airflow through the engine 10 is in a direction parallel to the principle axis 9, from the fan 23 towards the bypass and core exhaust nozzles 18, 20, as illustrated by the arrow 42 in Figure 1. The general direction of airflow 42 also defines an upstream direction, directly opposing the general direction of air flow 42. The air flow outside the engine 10, over the nacelle 21, is in the same direction as air flow through the engine 10.

As shown in Figures 1 and 2, the core shaft 26 interconnecting the low pressure compressor 14 and the low pressure turbine 19 extends within the core shaft 27 interconnecting the high pressure compressor 15 and the high pressure turbine 17. Both shafts 26, 27 are mounted from the stationary support structures of the engine 10 by bearings 50. The mounting of the core shaft 26 interconnecting the low pressure compressor 14 and the low pressure turbine 19 will now be discussed in more detail below, although it will be appreciated that the discussion may equally be applied to the core shaft 27 interconnecting the high pressure compressor 15 and the high pressure turbine 17.

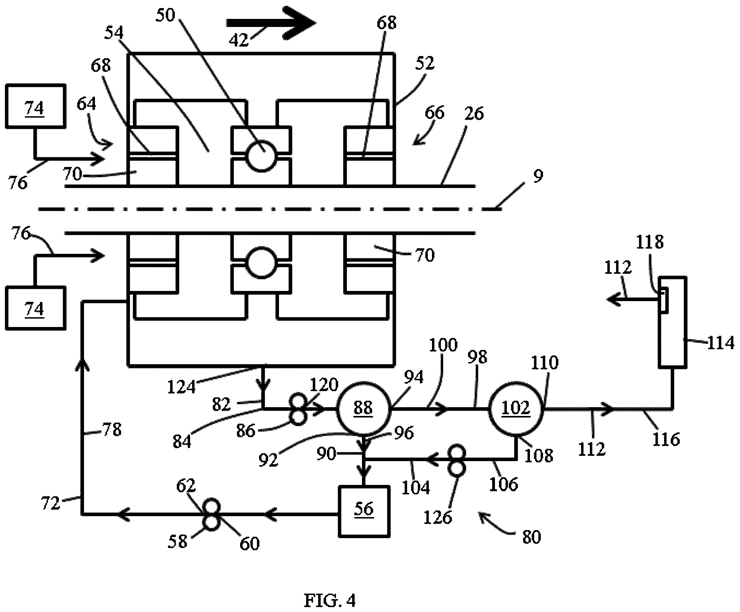

As shown in **Figure 4****,** a bearing 50 is received within a housing 52 formed annularly around the core shaft 26. The housing 52 defines a chamber 54 around the bearing 50. In order to lubricate the bearing 50, oil 78 is pumped from an oil tank 56, into the chamber 54, through a conduit 72, by a pump 58. The pump 58 has an inlet 60 in fluid communication with the oil tank 56, and an outlet 62 in fluid communication with the bearing chamber 54.

The housing 52 of the bearing chamber 54 is a stationary structure. However, the core shaft 26 extends through the housing 52 at an upstream opening 64 and a downstream opening 66. To prevent oil escaping the chamber 54, seals 68 are provided between the shaft 26 and the housing 52 at the openings 64, 66.

In the embodiment shown, the seals 68 are contacting carbon seals, formed between the housing and an annular mounting structure 70 on the shaft 26. Contacting carbon seals comprise segmented arcs of carbon, held together with a garter spring to create a tight clearance, either between segments, or between the shaft and the segments.

To prevent, or severely limit, oil escaping through the seals 68, an air supply system 74, or seal pressurisation system is provided. The air supply system 74 syphons a portion of the pressurised air from one of the compressors 14, 15 of the engine core 11, and directs the pressurised air 76 at the seals 68.

Typically, air for the air supply system 74 is drawn from core air flow A. For the generally upstream bearing chambers 54, is drawn from near the splitter 13, which divides the engine core 11 from the bypass duct 22. The air is typically drawn upstream of the low pressure compressor 14, at a pressure between 3 and 16psia (20 to 111kPa). For generally downstream bearing chambers 54, air is drawn from the high pressure compressor 15, at higher pressures. In some examples, the air may be a mixture from multiple different pressure sources.

Figure 4 only illustrates the air supply system 74 directing air at the seal 68 at the upstream opening 64. However, it will be appreciated that air is also directed at the seal 68 at the downstream opening 66.

A portion of the air directed at the seals 68 is drawn into the chamber 54. The air drawn into the chamber 54 mixes with the oil 78. The oil 78 and air 76 should be separated prior to venting, to avoid venting oil, which can pose a fire risk, is environmentally damaging, and inefficient. In order to extract the oil, an oil recovery system 80 is provided.

In the oil recovery system 80, a first air and oil mixture 82 is drawn from the bearing chamber 54 through an outlet 124 arranged in the lower part of the chamber 54, such that gravity helps draw the mixture 82. The mixture 82 is drawn through a conduit 84 by a pump 86, to a separator 88.

The pump 86 causes a reduction in the pressure inside the bearing chamber 54, which creates a pressure differential over the seals 68, with high pressure air outside the chamber 54, and low pressure air inside. Thus the pressurised air 76 is drawn into the chamber 54, and oil cannot exit through the seals 68. As a result of the high quality of the seals 68, only a small quantity of air 76 is drawn into the bearing chamber 54. The pump 86 is continually pumping, in order to maintain the pressure differential overtime.

At the separator 88, a first portion of oil 90 is removed from the mixture 82. The first portion of scavenged oil 90 is provided from a first outlet 92 of the separator 88, to the oil tank 56, through a first scavenge conduit 96. At a second outlet 94 of the separator 88, a second air and oil mixture 98 is provided. The second air and oil mixture 98 has lower oil content than the first mixture 82, having been through the separator 88.

The second air and oil mixture 98 is provided through conduit 100 to a breather apparatus 102, where a second portion oil 104 is extracted from the mixture 98. The second portion of oil 104 is fed from a first outlet 108 of the breather 102 to the oil tank 56 through a second scavenge line 106. A pump 126 is provided on the second scavenge line 106, to pump the oil 104 to the tank 56.

At a second outlet 110 of the breather 102, the air is provided for venting 112. This vent air 112 may include small quantities of oil and other contaminants, but these will be considered negligible. The vent air 112 is fed through a vent conduit116, into an exit mast 114 for venting overboard of the engine 10.

The exit mast 114 has an opening 118 through which the vent air 112 is exhausted. The exit mast 114 is arranged so that the opening 118 faces in an upstream direction, relative to the direction of airflow 42 through the engine 10. As a result of this, the dynamic head of the airflow through the engine 10 is added to the discharge pressure of the exit mast 114, which is equivalent to the static pressure that the air is vented into. The dynamic head therefore increases the pressure of the oil tank 56, because the exit mast 144 is in fluid communication with the oil tank 56, through conduits 100, 116, and the breather 102 and separator 88. This in turn increases the pressure at the inlet 60 of the pump 58 that pumps oil 78 to the bearing chamber 54.

At high power operation, there is a large airflow through or past the engine providing a large dynamic head. Therefore, even at high altitudes, where ambient pressure is low (2-3 psi or 10-25 kPa), the pressure at the inlet 60 of the pump 58 is sufficient to avoid cavitation.

At low power operation, the flow through the engine is low, and so the pressure of the air provided by the air supply system 74 is low. Low power operation is typically at low altitude, and so the ambient pressure is able to sufficiently pressurise the inlet 60 of the pump 58 to avoid cavitation. As shown in Figure 4, the only route of extracting the oil and air mixture from the bearing chamber 54 is through the conduit 84 to the separator 88, via the pump 86. There is no separate vent. Therefore, there is no need for a low discharge pressure relative to the pressure of air delivered from the air supply system 74, to maintain the correct pressure differential over the seals.

It will further be appreciated that there is no pressure control valve or constriction on the conduits 100, 116 between the exit mast 114 and the oil tank. The pressure of the oil tank 56, and thus the pressure at the inlet 60 of the pump 58 is a result of only the pressure at the openings of the exit mast 114, and the pressure at the outlet 120 of the pump 86 for drawing the oil/air mixture 82 from the bearing chamber 54.

As shown in Figures 1 and 2, a number of guide vanes and support structures 44 extend radially within the bypass duct 22. In the embodiment discussed above, the exit mast 114 is provided through one of the radially extending structures 44. An opening 122 is formed in the radially extending structure 44, that aligns with the opening 118 in the exit mast 114, such that the air 112 is vented in an upstream direction, into the bypass flow B. The flow may be vented at any suitable axial or radial position in the flow B.

The separator 88 and breather 102 may be provided in any suitable position in the engine 10. For example the separator 88 and breather 102 may be provided in the engine core 11, within the structure 13 provided between the engine core 11 and the bypass duct 22, or within the nacelle 21 of the engine 10. Typically, the breather 102 requires some drive power. In one example, this may be taken from an accessory gearbox (not shown) of the engine 10. Thus, at least the breather 102 may be located in the vicinity of the accessory gearbox. The accessory gearbox may be provided in any of the above locations. The separator 88 and breather 102 need not be co-located, although they may be.

It will be appreciated that where necessary, the conduits 72, 84, 96, 100, 116 of the system shown in Figure 4 may extend through radially extending structures of the engine 10, such as, but not limited to guide vanes (also referred to as stators) or support structures 44 of the core engine 11, extending radially across the core engine flow A, and the radially extending vanes and structures 44 extending across the bypass flow B.

In the above description, the opening 118 in the exit mast 114 is described as facing an upstream direction. The direction of the opening may be characterised by an opening axis that extends perpendicular to a plane defined by the opening. In some embodiments, the opening axis may be parallel to the direction of airflow through the engine 10, such that that the opening 118 fully faces upstream. In other embodiments, the opening 118 may be formed such that the opening 118 is rotated relative to the direction of airflow, such that the opening partially faces upstream.

The opening axis may form any angle with the direction of airflow from 0 degrees (where the opening faces directly upstream) to 90 degrees (where the opening is perpendicular to the upstream direction) and still be considered to be at least partially facing upstream.

The relative angle of the opening 118 to the flow direction may be used to control the pressure of the oil tank 56, to set the desired pressure. The size of the opening 118 may be used instead of or as well as the angle, to also control the pressure.

In the above description, it has been disclosed that the oil tank 56 provides oil to a bearing chamber 54 of the engine 10, and the oil recovery system 80 recovers the oil from the bearing chamber 54 to vent air. However, it will be appreciated that the gearbox 30 of the engine 10 also requires lubrication. The gearbox 30 may be sealed in a similar manner to the bearing chamber 54, including the creation of a pressure differential using pressurised air. Thus, the system discussed above may also be applied to the gearbox 30.

The bearing chamber 54 and gearbox 30 are just two examples of lubricating chambers, that may use pressurised air to assist sealing, and which require separation of the pressurised air and oil prior to venting. The system 80 discussed above may be applied to any such lubricating chamber.

It will be appreciated that a gas turbine engine 10 may include multiple bearing chambers 54, gearboxes 30 and other lubricating chambers. In one example, all of the chambers may be fed by a single oil tank 56, and the oil/air mixture from each 30, 54 may be drawn to a single separator 88, and then in turn to a single breather 102 and exit mast 114.

In other examples, each chamber 30, 54 may be provided with a separate tank 56, separator 88, breather 102 and exit mast 115, such that the lubrication of each chamber is independent of the other chambers 54, 30. In further examples, a tank 56, separator 88, 102 and exit mast 115 may be coupled to a group of two or more chambers. In yet further examples, certain components may be used for extracting oil from different lubricating chambers and venting the air. For example, each of a number of lubricating chambers may have a dedicated separator 88, but may be fed by a common tank 56, and may vent to a common exit mast 114.

It will be appreciated that in some cases, the separator 88 may achieve sufficient separation of oil and air such that the air output from the separator 88 is sufficiently clean to be directly vented. As such, the breather 102 is optional, and may be omitted. In other examples, further steps of separation may be provided in addition to the separator 88 and breather 102, each feeding oil back to the tank 56.

In the example discussed above, the exit mast 114 passes through a vane or support structure 44 crossing the bypass duct 22. It will be appreciated that in some examples, the vane or support structure 44 may directly form the exit mast 114, with the vent air 112 passing directly through the structure 44.

In other examples, the exit mast 114 may be formed of a separate structure that projects into the bypass duct 22.

In the examples discussed above, the air is vented into the bypass duct 22. However, in other examples, the air may be vented outside the whole engine 10. For example, the exit mast 114 may project from the nacelle 21, or may be formed in the nose cone of the fan 23, or in another upstream facing position.

Furthermore, although the example discussed above includes a single opening 118 in the exit mast, the exit mast may include a plurality of openings. At least some of the openings, but not necessarily all, should face in the upstream direction, to sufficiently pressurise the oil tank 56.

In the above description, contacting carbon seals 68 are used to seal the lubricating chamber 30, 54 to the core shaft 26, 27. However, any suitable type of low flow seal may be used. For example, the seal 68 may be an air riding carbon seal, formed by carbon elements held on a film of air, lip seals or brush seals. The seals 68 may also be a labyrinth seal or any other type of seal.

The arrangement of pumps and conduits discussed above is given by way of example only. Any suitable arrangement may be used to achieve the required fluid communication between the oil tank 56, lubricating chamber 30, 54 separator 88, breather 102 (if included) and exit mast 114.

For example, where Figure 4 shows a single conduit, multiple parallel conduits may be provided. For example, although Figure 4 only shows a single drain point from the bearing chamber 54 to the separator 88, multiple drain points may be provided.

A number of different types of separator 88 and breather 102 will be apparent to the person skilled in the art. Any suitable type of separator 88 and breather 102 may be used.

In some examples, the separator 88 may be separate from the tank 56, and oil 90 may be provided to the tank 56 by scavenge conduit 96. In other examples, the separator 88 may be co-located with the tank 56, on an inlet of the tank 56, such that the separator 88 provides oil 90 directly to the tank without an intervening conduit. In yet further examples, the separator 88 may comprise a de-aerator or the like provided within the tank 56. **Figure 5** illustrates an example of the arrangement of the oil recovery system 80 in such an example. Unless stated otherwise, the example shown in Figure 5 is the same as discussed above, in relation to Figure 4.

In the oil recovery system 80 shown in Figure 5, the conduit 84 for carrying the oil and air mixture 82 from the lubricating chamber is connected directly to the oil tank 56. The oil and air mix 82 is pumped directly into the oil tank 56 by a pump 86 on the conduit 84. The oil tank 56 includes a de-aerator or other separator 88, which separates the oil and air. Oil 78 collected in the tank 56 is recirculated to the lubricating chamber 54 through a supply conduit 72, using a pump 58, as discussed above.

The oil tank 56 includes a vent conduit 128 coupled between the oil tank 56 and the breather 102. The vent conduit 128 carries the second mixture of oil and air 98 (with reduced oil compared to the first mixture 82) to the breather 102, which carries out further separation. Any further oil 104 extracted is provided to the oil tank 56 by the pump 126 on the scavenge line 106. The air 112 form the breather 102 is provided to the exit mast 114 as discussed above.

As discussed above, if the separator 88 achieves sufficient separation of oil and air, then the breather 102 may be omitted and the vent conduit 128 may provide air 112 directly to the exit mast 114.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An oil recovery system (80) arranged to recover lubricating oil (78) in a gas turbine engine (10), the oil recovery system (80) comprising:
a separator (88) arranged to extract lubricating oil (90) from a mixture of lubricating oil and air (82);
an oil tank (56) arranged to collect lubricating oil (90) extracted from the mixture (82); and
an exit mast (114) arranged to vent air (112) extracted from the mixture (82) overboard from a core (11) of the engine (10),
wherein the exit mast (114) comprises one or more openings (118) for venting air (112) from the separator (112); and wherein the one or more openings (118) faces at least partially upstream relative to a direction of airflow (42) through the gas turbine engine (10), such that the air (112) is vented in the upstream direction, and a dynamic head of any airflow pressurises the oil tank (56), via the exit mast (114).

2. The oil recovery system (80) as claimed in claim 1, wherein the exit mast (114) is arranged to vent air (112) into a bypass duct (22) of the gas turbine engine (10).

3. The oil recovery system (80) as claimed in claim 1 or claim 2, comprising:
a pump (58) for circulating lubricating oil (78) from the oil tank (56) to a lubricating chamber (30, 54) for lubricating a part of the gas turbine engine (10),
wherein an inlet pressure of the pump is at least in part dependent on a pressure of the oil tank (56).

4. The oil recovery system (80) as claimed in any preceding claim, comprising:
a pump (86) for circulating the mixture of lubricating oil and air (82) from a lubricating chamber (30, 54) for lubricating a part of the gas turbine engine (10) to the separator (88).

5. The oil recovery system (80) as claimed in any preceding claim, wherein the separator (88) outputs the lubricating oil (90) to the tank (56), and a second mixture of lubricating oil and air (98), with reduced concentration of oil; and wherein the oil recovery system (80) further includes:
an oil breather (102), arranged to extract further lubricating oil (104) from the second mixture of lubricating oil and air (98), and to provide the further lubricating oil (104) to the oil tank (56), and the air (112) with any remaining oil content to the exit mast (114).

6. The oil recovery system (80) as claimed in any one of claims 1 to 4, wherein the exit mast (114) is in direct fluid communication with the separator (88) or oil tank (56).

7. The oil recovery system (80) as claimed in any preceding claim, comprising one or more conduits (84, 100, 116) arranged between the lubricating chamber (54) and the exit mast (114), wherein the conduits (84, 100, 116) do not include any pressure control valve or pressure control constriction.

8. The oil recovery system (80) as claimed in any preceding claim, wherein:
each of the one or more openings (118) has an opening axis extending perpendicular to a plane defined be the opening (118);
each of the one or more openings has an opening angle defined between the opening axis and the direction of airflow (42);
the opening angle can vary between 0 degrees and 90 degrees, such that the pressure of the oil tank (56) is at least partially dependent on the opening angle.

9. A gas turbine engine (10) for an aircraft comprising:
an engine core (11) comprising a turbine (19), a compressor (14), and a core shaft (26) connecting the turbine (19) to the compressor (14);
a fan (23) located upstream of the engine core (11), the fan (23) comprising a plurality of fan blades;
one or more lubricating chambers (30, 54) arranged around the core shaft (26), each lubricating chamber comprising seals (68) between a housing (52) of the chamber (30, 54) and the core shaft (26);
an air supply system (74) arranged to direct pressurised air (76) at the seals (68), in order to prevent escape of lubricating oil (78) from the lubricating chamber (30, 54), wherein the air (76) mixes with the lubricating oil (78) in the lubricating chamber (30, 54); and
an oil recovery system (80) as claimed in any preceding claim, arranged to recover lubricating oil (78) from the oil and air mixed in the lubricating chamber (30, 54).

10. The gas turbine engine (10) as claimed in claim 9, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine (17) to the second compressor (15);
the second turbine (17), second compressor (15), and second core shaft (27) are arranged to rotate at a higher rotational speed than the first core shaft (26); and
the air supply system (74) is arranged to draw air from upstream of the first compressor (14).

11. The gas turbine engine (10) as claimed in claim 9 or claim 10, wherein the oil recovery system (80) is arranged to circulate lubricating oil (78) from the oil tank (56) to the lubricating chamber (30, 54).

12. The gas turbine engine (10) as claimed in any one of claims 9 to 11, wherein:
the gas turbine engine (10) includes a bypass duct (22) arranged around the engine core (11);
the bypass duct (22) includes radially extending support structures and/or guide vanes (44); and
wherein the exit mast (114) is arranged in one of the support structures and/or guide vanes (44), and the support structures and/or guide vane (44) includes an opening (122) facing downstream into a bypass airflow, to vent air from the exit mast (114) into the bypass duct.

13. The gas turbine engine (10) as claimed in any one of claims 9 to 12, wherein at least one of the lubricating chambers (30, 54) comprises a bearing chamber (54).

14. The gas turbine engine (10) as claimed in any one of claims 9 to 13, further comprising:
a gearbox (30) that receives an input from the core shaft (26) and outputs drive to the fan (23) so as to drive the fan at a lower rotational speed than the core shaft (26),
wherein at least one of the lubricating chambers (30, 54) comprises the gearbox (30).

15. A method of pressuring an oil tank (56) for collecting lubricating oil (90) from a mixture of oil and air (82), in a gas turbine engine (10), the method comprising:
separating a mixture of oil and air (82);
collecting the lubricating oil (90) in an oil tank (56); and
venting the air (112) through an exit mast (114) having an opening (118) facing at least partially upstream into an air flow through the gas turbine engine (10), such that a dynamic head of any airflow through the engine (10) pressurises the oil tank (56), via the exit mast (14).
